Europäisches Patentamt

European Patent Office

Office européen des brevets

(11) Publication number: **0 273 620 B1**

## EUROPEAN PATENT SPECIFICATION

(45) Date of publication of patent specification: **18.03.92**   (51) Int. Cl.5: **G11B 5/52**, G11B 5/53

(21) Application number: **87310883.1**

(22) Date of filing: **10.12.87**

(54) **Rotary magnetic head devices.**

(30) Priority: **30.12.86 JP 312917/86**

(43) Date of publication of application:
**06.07.88 Bulletin 88/27**

(45) Publication of the grant of the patent:
**18.03.92 Bulletin 92/12**

(84) Designated Contracting States:
**AT DE ES FR GB IT NL**

(56) References cited:
**EP-A- 0 177 088**

**PATENT ABSTRACTS OF JAPAN, unexamined applications, field P, vol. 7, no. 93, April 19 1983 THE PATENT OFFICE JAPANESE GOVERNMENT page 97 P 192**

**PATENT ABSTRACTS OF JAPAN, unexamined applications, field P, vol. 7, no. 101, April 28, 1983 THE PATENT OFFICE JAPANESE GOVERNMENT page 11 P 194**

**PATENT ABSTRACTS OF JAPAN, unexamined applications, field P, vol. 7, no. 113, May 18, 1983 THE PATENT OFFICE JAPANESE GOVERNMENT page 4 P 197**

(73) Proprietor: **SONY CORPORATION**
**7-35 Kitashinagawa 6-Chome Shinagawa-ku Tokyo 141(JP)**

(72) Inventor: **Suwa, Hisashi**
**Patents Div. Sony Corp. 6-7-35 Kitashinagawa**
**Shinagawa-ku Tokyo 141(JP)**
Inventor: **Sato, Seiji**
**Patents Div. Sony Corp. 6-7-35 Kitashinagawa**
**Shinagawa-ku Tokyo 141(JP)**
Inventor: **Matsubara, Susumu**
**Patents Div. Sony Corp. 6-7-35 Kitashinagawa**
**Shinagawa-ku Tokyo 141(JP)**
Inventor: **Yano, Eiji**
**Patents Div. Sony Corp. 6-7-35 Kitashinagawa**
**Shinagawa-ku Tokyo 141(JP)**
Inventor: **Koizumi, Katsuyuki**
**Patents Div. Sony Corp. 6-7-35 Kitashinagawa**
**Shinagawa-ku Tokyo 141(JP)**

EP 0 273 620 B1

**PATENT ABSTRACTS OF JAPAN, unexamined applications, field P, vol. 7, no. 290, December 24, 1983 THE PATENT OFFICE JAPANESE GOVERNMENT page 125 P 245**

(74) Representative: **Thomas, Christopher Hugo et al**
**D Young & Co 10 Staple Inn**
**London WC1V 7RD(GB)**

## Description

This invention relates to rotary magnetic head devices suitable for a helical scan type video tape recorder (VTR) in which a magnetic tape is caused to run obliquely in contact with a head drum or guide drum, and in which record tracks are formed at a predetermined angle of inclination with respect to the tape.

A VTR, especially a portable one, is required to be of small size and weight, and the rotary magnetic head device is a mechanism which significantly influences these features of the VTR.

The rotary magnetic head device described in Japanese laid-open patent publication 57/198531, for example, has been proposed with the aim of reducing the size and weight of a VTR. In that head device, a bearing housing supporting a stationary drum portion of the guide drum of the VTR with respect to the rotary shaft is formed substantially within the interior of the stationary portion to reduce the size of various components such as the rotary shaft bearing housing, while a flat type motor is used as the driving electric motor to reduce the overall length and thickness of the rotary magnetic head mechanism.

However, in recent VTRs, it is required to reduce the size and weight further, particularly in a so-called 8mm VTR, in which it has been proposed to reduce the loading area for the magnetic tape by setting the mounting positions of the tape cassette and the magnetic head device in closer proximity to each other.

There has also been proposed an 8mm VTR wherein a recess provided for engaging with a loading unit of the VTR is partially confronted by a rotary magnetic head device, for reducing the size of the VTR further. In such an 8mm VTR, for reducing the size of the loading area for the magnetic tape and simultaneously reducing the thickness of the VTR further, it is required to reduce the size and thickness of the rotary magnetic head device which is contacted by the magnetic tape drawn out of the tape cassette.

Japanese laid-open patent specification 58/19730 (Patent Abstracts of Japan, vol 7, no 93, 97 page 192) discloses a rotary magnetic head device having features similar to those of the precharacterizing part of claim 1.

According to the present invention there is provided a rotary magnetic head device comprising:
a first tape guide drum fixedly supported on a supporting shaft;
a second tape guide drum supported for rotation relative to said supporting shaft in a facing relation to said first drum, said second drum carrying a magnetic head;

a third tape guide drum mounted facing said second drum, said third drum being connected and secured to said first drum by a connecting member; and
a rotary transformer having its rotor part mounted within the interior of said second drum and having its stator part attached to said third drum in a facing relation to said rotor part;
characterized by:
cut-outs in portions of said first and third drums, respectively, said cut-outs providing respective surfaces which are inclined relative to the plane of rotation of said magnetic head and are parallel to each other, a tape-contacting region of said drums being between the planes of said respective surfaces.

The invention will now be described by way of example with reference to the accompanying drawings, throughout which like parts are referred to by like references, and in which:
Figure 1 is a partial longitudinal sectional view of a rotary magnetic head device;
Figures 2 and 3 are diagrammatic plan and side views thereof;
Figure 4 is a partial longitudinal sectional view of a modified rotary magnetic head device;
Figure 5 is a partial longitudinal sectional view of another modified rotary magnetic head device;
Figure 6 is a fragmentary view, shown partly in section, and showing the mounting of a magnetic head and magnetic head attachment plate; and
Figure 7 is a diagrammatic side view of an embodiment of rotary magnetic head device according to the present invention.

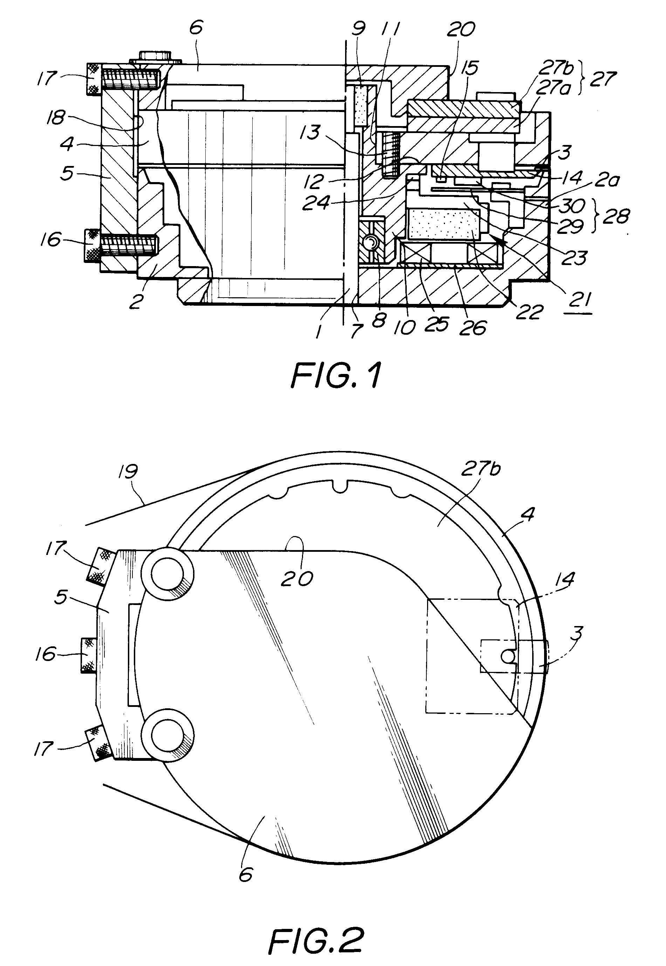

Referring first to Figure 1, the magnetic head device comprises a first tape guide drum 2 fixedly supported by a supporting shaft 1, a second tape guide drum 4 facing the first drum 2, rotatable relative to the shaft 1 and carrying a magnetic head 3, and a third tape guide drum 6 facing the second drum 4 and securely connected through a connecting member 5 to the first drum 2.

The first drum 2 is securely mounted on the shaft 1 by having the lower end of the shaft 1 fitted into a mating opening 7 formed centrally of the guide drum 2.

The second drum 4 has a central opening 11 through which is passed a bearing housing 10 which is mounted for rotation relative to the shaft 1 through a slide bearing 9 such as a bearing and a metal bearing (not shown), while the second drum 4 has its inner peripheral edge resting on a shoulder 12 formed halfway in the bearing housing 10, and is secured thereto by a screw 13, so that the second drum 4 may be rotated in unison with the bearing housing 10. The head 3 is mounted on a head attachment plate 14 mounted on the lower side of the second drum 4 facing the first drum 2, so that the head 3 may be rotated in unison with the second drum 4. The head attachment plate 14 is secured to the second drum 4 by a set screw 15 which is introduced from the lower side of the second drum 2. The head 3 is attached to the upper surface of the head attachment plate 14 facing the lower side of the second drum 4.

The third drum 6 has its central part abutting on the foremost part of the shaft 1, while the connecting member 5 has one end secured to the lateral side of the first drum 2 by a set screw 16 and its other end secured to the third drum 6 by set screws 17, so that the third drum 6 is securely connected to the first drum 2, and both are secured to the shaft 1. The portion of the connecting member 5 straddling the second drum 4 has a cut-out or recess 18 so as not to interfere with rotation of the second drum 4, and also so as not to damage the foremost part of the head 3 which projects from the outer peripheral surface of the second drum 4.

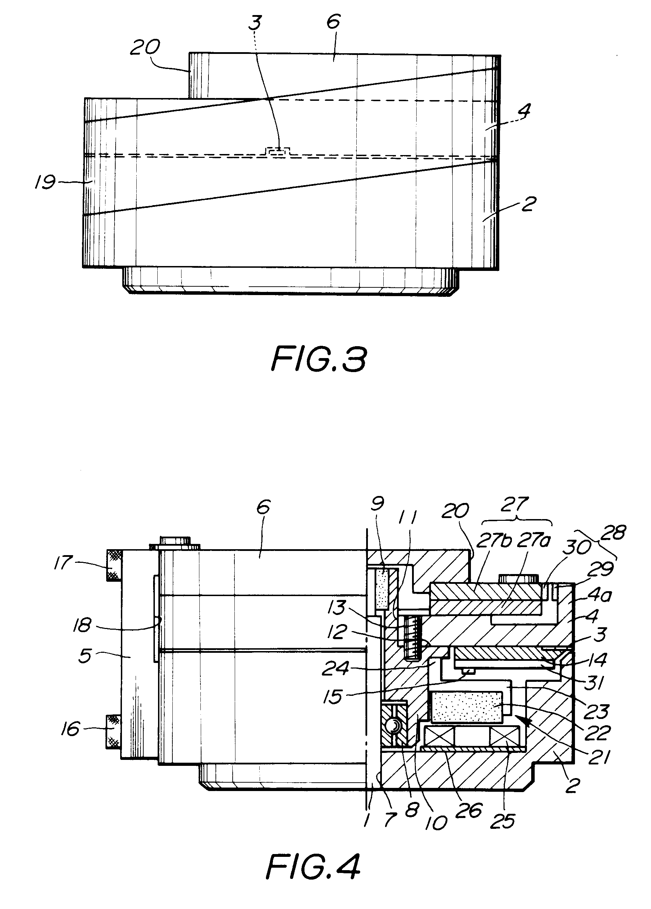

In a helical scan type rotary magnetic head device, a magnetic tape 19 is wound over a predetermined angular extent, herein over about 180°, on the device, as shown in Figure 2. The tape 19 is caused to run horizontally to or in parallel with the tape cassette mounting or attachment surface along the lateral side of the rotary magnetic head device, which is placed at a predetermined angle relative to the tape cassette mounting surface, as shown in Figure 3, so that the tape 19 is caused to run as it is wrapped with an inclination of a predetermined angle relative to the shaft 1. In other words, the tape 19 is caused to run obliquely from the upper end towards the lower end of the rotary magnetic head device. The rotary magnetic head device guides the tape 19, and for achieving stable guiding the tape 19 may be slidingly contacted with the head 3 across its overall width and at any circumferential position over the angular extent of sliding contact of the tape 19 with the head 3. For this reason, at least a portion of the first and third drums 2 and 6 mounted on the top and bottom sides of the second drum 4, are completely free of contact with the tape 19.

To this end, the portion of the third drum 6 mounted above the second drum 4 which is not contracted by the tape 19 is formed with a cut-out or recess 20. As shown in Figure 2, the recess 20 is formed in such a manner that a portion of the second drum 4 is exposed outwardly at the portion of the third drum 6 not contacted by the tape 19 including the portion thereof projecting to the uppermost position when the rotary magnetic head device is mounted at a predetermined angle on the tape cassette mounting surface.

An electric motor 21 for rotating the second drum 4 and the magnetic head 3 secured thereto is mounted between the first drum 2 and the bearing housing 10. A rotor magnet 22 of the motor 21 is attached to a rotor yoke 23 and has a central cylindrical section 24 fitted to the lower side of the shoulder 12 of the bearing housing 10 mounting the second drum 4. A stator coil 25 is securely mounted on the inner peripheral surface of the first drum 2 through a stator base plate 26, so that the stator coil 25 faces the rotor magnet 22. In this manner, by placing the rotor yoke 23 below the second drum 4, and the stator coil 25 on the inner peripheral surface of the first drum 2, the motor 21 may be disposed substantially within the interior space of the first drum 2.

A rotary transformer 27 for receiving and/or transmitting recording and/or reproduced signals to and from the head 3, is disposed between the second and third drums 4 and 6, as shown in Figure 1. A rotor part 27a of the transformer 27 is mounted on the upper surface of the second drum 4 opposite to the surface thereof mounting the head 3, while a stator part 27b is mounted facing the rotor part 27a on the lower surface of the third drum 6 facing the second drum 4, for forming the transformer 27. By having the rotor and stator parts 27a and 27b mounted in this manner, the transformer 27 is arranged so as to be enclosed within a space defined between the second and third drums 4 and 6.

A frequency generator (FG) coil base plate 29 for an FG 28 which produces output signals indicating the rotational speed of the motor 21 has one end secured to an upper end of an upright peripheral wall 2a of the first drum 2 contacted by the tape 19 and has its other end extending into a space defined between the head 3 and the rotor yoke 23. An FG coil (not shown) is formed on the FG plate 29, and an FG magnet 30 is mounted above the upper surface of the rotor yoke 23 for facing the FG plate 29. The FG plate 29 is formed of a magnetizable material, such as silicon steel plate, and is positioned in the space between the head 3 and the rotor yoke 23 for intercepting leakage flux from the rotor magnet 22 of the motor 21. Thus, although the motor 21 and the head 3 are disposed adjacent to each other, any adverse effect of the leakage magnetic flux from the rotor magnet 22 and resulting deterioration in the recording and reproducing characteristics of the head 3 may be avoided by having the motor 21 placed in this manner inside the first drum 2.

In the above embodiment, the FG 28 is mounted in the space between the head 3 and the rotor yoke 23. Alternatively, as shown in Figure 4, the FG magnet 30 may be mounted on the outer peripheral surface of the stator part 27b of the transformer 27, with the FG plate 29 mounted on the inner peripheral wall of the upright peripheral wall 4a of the second drum 4 contacted by the tape 19, facing the FG magnet 30. In this case, the mounting relation between the FG plate 29 and the FG magnet 30 may be reversed to that shown and described above. With the FG 28 arranged as described above, the mounting space between the head 3 and rotor yoke 23 for mounting the FG 28 may be reduced, while the first and second drums 2 and 4 may be mounted in closer proximity to each other, so that the overall thickness of the rotary magnetic head device may be further reduced. In the present embodiment, the FG magnet 30, which requires a high degree of mounting accuracy, need not be mounted on the rotor magnet 22 of the motor 21, so that the mounting accuracy is eased to some extent, while the assembly of the motor 21 is also facilitated.

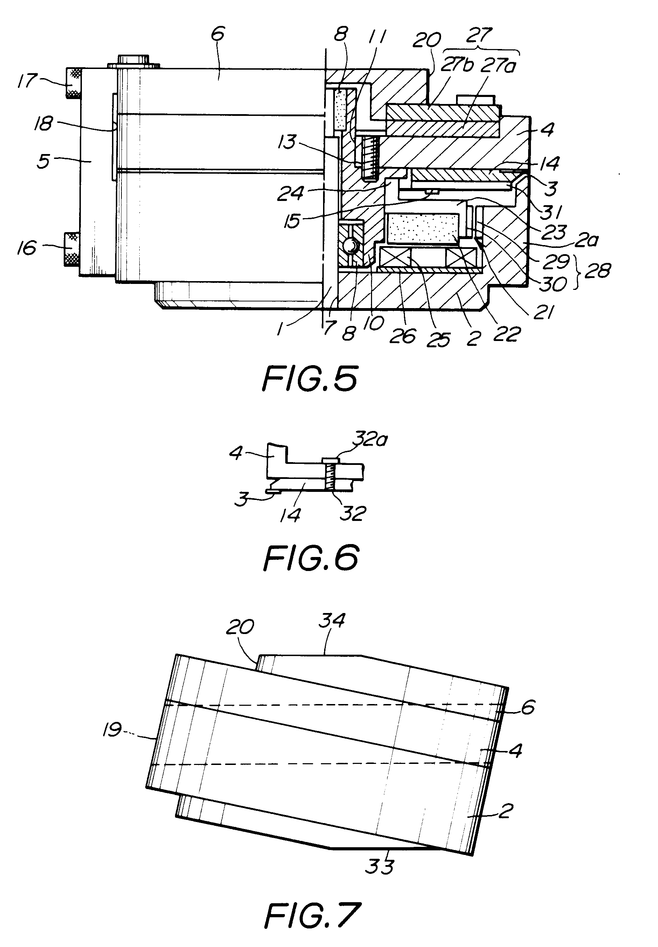

Still alternatively, the FG magnet 30 may be mounted on the outer periphery of the rotor yoke 23 of the motor 21, with the FG plate 29 being mounted on the inner peripheral surface 2a of the first drum 2 facing the FG magnet 30, as shown in Figure 5.

With the FG 28 arranged as shown in Figures 4 and 5, a magnetic shield plate 31 is provided on the lower side of the head attachment plate 14 facing the rotor magnet 22 to prevent the adverse effect of of leakage flux from the rotor magnet 23 on the head 3.

Referring to Figure 6, the head attachment plate 14 may be attached to the lower side of the second drum 4 by a set screw 32 which is introduced from the upper side of the second drum 4 on the side of the attachment surface for the transformer 27, with the head 3 being attached to the lower side of the plate 14. With the head attachment plate 14 and the head 3 mounted in this manner, the head 32a of the set screw 32 does not project towards the first drum 2, so that the space in the first drum 2 may be enlarged at least by the volume occupied by the projecting portion of the head 32a, with the result that the packing density of the various components in the first drum 2 may be increased, so further reducing the size of the rotary magnetic head device.

Referring now to the embodiment shown in Figure 7, it is noted that in a VTR, such as 8mm VTR, the rotary magnetic head device is mounted at a predetermined inclination relative to the tape cassette mounting surface, with the tape 19 running obliquely from the upper to the lower ends of the rotary magnetic head device. For this reason, at least certain portions of the first and third drums 2 and 6 arranged above and below the second drum 4 are completely free of contact with the tape 19. Thus, in conjunction with the recess 20, the portion of the first drum 2 not contacted by the tape 19, inclusive of the portion of the first drum 2 projecting to the lowermost level when the rotary magnetic head device is mounted at the prescribed angle relative to the tape cassette mounting surface, has a cut-out 33 to provide a surface running horizontally and parallel to the tape cassette mounting surface. In addition, the upright surface of the recess 20 formed in the third drum 6 is also cut-out towards the upper surface of the third drum 6 to provide a surface 34 running horizontally or parallel to the cut-out 33. By forming the cut-out 33 and surface 34 in the first and the third drums 2 and 6, the height level of the rotary magnetic head device when mounted in the VTR with the predetermined inclination relative to the tape cassette mounting surface may be advantageously reduced.

**Claims**

1. A rotary magnetic head device comprising:
   a first tape guide drum (2) fixedly supported on a supporting shaft (1);
   a second tape guide drum (4) supported for rotation relative to said supporting shaft (1) in a facing relation to said first drum (2), said second drum (4) carrying a magnetic head (3);
   a third tape guide drum (6) mounted facing said second drum (4), said third drum (6) being connected and secured to said first drum (2) by a connecting member (5); and
   a rotary transformer (27) having its rotor part (27a) mounted within the interior of said second drum (4) and having its stator part (27b) attached to said third drum (6) in a facing relation to said rotor part (27a);
   characterized by:
   cut-outs (20, 34; 33) in portions of said first and third drums (2, 6), respectively, said cut-outs (20, 34; 33) providing respective surfaces which are inclined relative to the plane of rotation of said magnetic head (3) and are parallel to each other, a tape-contacting region of said drums (2, 4, 6) being between the planes of said respective surfaces.

2. A device according to claim 1 wherein a frequency generator (28) is provided on the lower side of the magnetic head (3) attached to said second drum (4) and on the upper inner peripheral surface of said first drum (2) facing said lower side, said frequency generator (28) intercepting leakage flux from a rotor magnet (22) of a driving electric motor (21) provided within the interior of said first drum (2).

3. A device according to claim 1 wherein a frequency generator (28) is provided on the outer peripheral surface of the stator part (27b) of said rotary transformer (27) provided on the third drum (6) and on the inner peripheral surface of said second drum (4) facing said outer peripheral surface.

4. A device according to claim 1 wherein a frequency generator (28) is provided on the outer peripheral surface of a rotor yoke (23) of a rotary magnet (22) rotated in unison with said second drum (4) and on the inner peripheral surface of said first drum (2) facing said outer peripheral surface.

5. A device according to claim 1 wherein a slide bearing (9) is used for supporting one of said first and second drums (2, 4) on said supporting shaft (1).

6. A device according to claim 1 wherein a head attachment plate (14) mounting said magnetic head (3) is mounted on the lower side of said second drum (4) by a set screw (15) introduced from the upper surface of said second drum (4), said upper surface being the rotary transformer attachment surface.

7. A video tape recorder comprising a device according to any one of the preceding claims mounted with said respective surfaces of said cut-outs (20, 34; 33) parallel to a tape cassette mounting surface of said video tape recorder.

**Revendications**

1. Dispositif à tête magnétique rotative comportant :
   un premier tambour de guidage de bande (2) supporté de façon fixe sur un arbre de support (1);
   un deuxième tambour de guidage de bande (4) supporté de façon rotative par rapport au dit arbre de support (1) en relation face à face avec ledit premier tambour (2), ledit deuxième tambour (4) portant une tête magnétique (3);
   un troisième tambour de guidage de bande (6) monté face au dit deuxième tambour (4), ledit troisième tambour (6) étant relié et fixé au dit premier tambour (2) par un élément de raccordement (5); et
   un transformateur rotatif (27) ayant sa partie de rotor (27a) montée à l'intérieur du dit deuxième tambour (4) et ayant sa partie de stator (27b) fixée au dit troisième tambour (6) en relation face à face avec ladite partie de rotor (27a);
   caractérisé par :
   des découpes (20, 34; 33) dans des parties des dits premier troisième tambours (2, 6), respectivement, les dites découpes (20, 34;

33) procurant des surfaces respectives qui sont inclinées par rapport au plan de rotation de ladite tête magnétique (3) et sont parallèles l'une à l'autre, une zone de contact de bande des dits tambours (2, 4, 6) étant entre les plans des dites surfaces respectives.

2. Dispositif selon la revendication 1, dans lequel un générateur de fréquence (28) est prévu sur le côté inférieur de la tête magnétique (3) fixée au dit deuxième tambour (4) et sur la surface périphérique intérieure supérieure du dit premier tambour (2) faisant face au dit côté inférieur, ledit générateur de fréquence (28) interceptant la fuite de flux d'un aimant de rotor (22) d'un moteur électrique d'entraînement (21) prévu à l'intérieur du dit premier tambour (2).

3. Dispositif selon la revendication 1, dans lequel un générateur de fréquence (28) est prévu sur la surface périphérique extérieure de la partie de stator (27b) du dit transformateur rotatif (27) prévu sur le troisième tambour (6) et sur la surface périphérique intérieure du dit deuxième tambour (4) faisant face à ladite surface périphérique extérieure.

4. Dispositif selon la revendication 1, dans lequel un générateur de fréquence (28) est prévu sur la surface périphérique extérieure d'une carcasse de rotor (23) d'un aimant rotatif (22) entraîné en rotation à l'unisson avec ledit deuxième tambour (4) et sur la surface périphérique intérieure du dit premier tambour (2) faisant face à ladite surface périphérique extérieure.

5. Dispositif selon la revendication 1, dans lequel un palier lisse (9) est utilisé pour supporter l'un des dits premier et deuxième tambours (2, 4) sur ledit arbre de support (1).

6. Dispositif selon la revendication 1, dans lequel une plaque de fixation de tête (14) supportant la dite tête magnétique (3) est montée sur le côté inférieur du dit deuxième tambour (4) au moyen d'une vis (15) introduite par la surface supérieure du dit deuxième tambour (4), ladite surface supérieure étant la surface de fixation de transformateur rotatif.

7. Magnétoscope comportant un dispositif selon l'une quelconque des revendications précédentes monté avec les dites surfaces respectives des dites découpes (20, 34; 33) parallèles à une surface de montage de cassette à bande du dit magnétoscope.

**Patentansprüche**

1. Eine Vorrichtung mit drehbarem Magnetkopf mit: einer ersten Bandführungstrommel (2), die an einer Stützwelle (1) fest abgestützt ist; einer zweiten Bandführungstrommel (4), die zur Drehung relativ zur Stützwelle (1) in einer der ersten Trommel (2) zugewandten Anordnung abgestützt ist, wobei die zweite Trommel (4) einen Magnetkopf (3) trägt; einer dritten Bandführungstrommel (6), die der zweiten Trommel (4) zugewandt ist, welche dritte Trommel (6) mittels eines Verbindungsgliedes (5) mit der ersten Trommel (2) verbunden und an dieser befestigt ist; und einem rotierenden Umformer (27), dessen Rotorteil (27a) im Inneren der zweiten Trommel (4) angebracht und dessen Statorteil (27b) in einer dem Rotorteil (27a) zugewandten Anordnung an der dritten Trommel (6) befestigt ist; gekennzeichnet durch: Ausschnitte (20, 34; 33) in Teilen der ersten bzw. dritten Trommel (2, 6), welche Ausschnitte (20, 34; 33) jeweilige Oberflächen aufweisen, die relativ Zur Drehebene des Magnetkopfes (3) geneigt und parallel zueinander sind, wobei ein Bandkontaktbereich der Trommeln (2, 4, 6) sich zwischen den Ebenen der jeweiligen Oberflächen befindet.

2. Eine Vorrichtung nach Anspruch 1, in welcher ein Frequenzgenerator (28) an der unteren Seite des an der zweiten Trommel (4) befestigten Magnetkopfes (3) und an der dieser unteren Seite zugewandten oberen inneren Umfangsfläche der ersten Trommel (2) vorgesehen ist, wobei der Frequenzgenerator (28) Streufluß von einem Rotormagneten (22) eines im Inneren der ersten Trommel (2) vorgesehenen elektrischen Antriebsmotor (21) auffängt.

3. Eine Vorrichtung nach Anspruch 1, in welcher ein Frequenzgenerator (28) an der äußeren Umfangsfläche des Statorteils (27b) des an der dritten Trommel (6) vorgesehenen rotierenden Umformers (27) und an der dieser äußeren Umfangsfläche zugewandten inneren Umfangsfläche der zweiten Trommel (4) vorgesehen ist.

4. Eine Vorrichtung nach Anspruch 1, in welcher ein Frequenzgenerator (28) an der äußeren Umfangsfläche eines Rotorbügels (23) eines im Einklang mit der zweiten Trommel (4) gedrehten Drehmagneten (22) und an der dieser äußeren Umfangsfläche zugewandten inneren Umfangsfläche der ersten Trommel (2) vorgesehen ist.

5. Eine Vorrichtung nach Anspruch 1, im welcher ein Gleitlager (9) zum Abstützen der ersten oder zweiten Trommel (2, 4) an der Stützwelle (1) verwendet wird.

6. Eine Vorrichtung nach Anspruch 1, in welcher eine den Magnetkopf (3) halternde Kopfbefestigungsplatte (14) an der unteren Seite der zweiten Trommel (4) mittels eines von der oberen Fläche der zweiten Trommel (4) eingefügten Gewindestiftes (15) befestigt ist, welche obere Fläche die Fläche des rotierenden Umformers ist.

7. Ein Videobandrecorder mit einer Vorrichtung nach wenigstens einem der vorhergehenden Ansprüche, die mit den jeweiligen Flächen der Ausschnitte (20, 34; 33) parallel zu einer Bandkassetten-Sitzfläche des Videobandrecorders angeordnet ist.

FIG. 1

FIG.2

FIG.3

FIG.4

FIG.5

FIG.6

FIG.7